# EUROPÄISCHE PATENTANMELDUNG

(11) **EP 1 065 390 A2**
(43) Veröffentlichungstag der Anmeldung: **03.01.2001**
(21) Anmeldenummer: 00113983.1
(22) Anmeldetag: 01.07.2000
(51) Int. Cl.: F16B 11/00

(54) **Verfahren zum Verkleben eines Karosseriebleches mit einer Profilleiste**

(30) Priorität: 01.07.1999 DE 19930109
(71) Anmelder: Lenhardt Maschinenbau GmbH, D-75242 Neuhausen-Hamberg (DE)
(72) Erfinder: Lenhardt, Karl, 75242 Neuhausen-Hamberg (DE)
(74) Vertreter: Twelmeier, Ulrich, Dipl.Phys.

(57) **Zusammenfassung**

Beschrieben wird ein Verfahren zum Verkleben eines Karosseriebleches (1) mit einer Profilleiste (2) durch Einspritzen eines Klebstoffs (8) in einen zwischen dem Karosserieblech (1) und der Profilleiste (2) bestehenden Zwischenraum, so daß das Karosserieblech (1) und die Profilleiste (2) über die Länge der Profilleiste (1) miteinander verbunden werden. Erfindungsgemäß ist vorgesehen, daß eine Profilleiste (2) mit einer längs verlaufenden Folge von Löchern (7) verwendet wird und der Klebstoff (8) in Teilmengen durch diese Löcher (7) hinter die Profilleiste (7) gespritzt wird, um dort einen Teilstrang zu bilden, wobei die Teilmengen so gewählt werden, daß sich die Teilstränge längs der Profilleiste (2) miteinander verbinden.

## Beschreibung

Die Erfindung geht aus von einem Verfahren mit den im Oberbegriff des Anspruchs 1 angegebenen Merkmalen. Es ist bekannt, bei Kleinbussen und Lieferwagen mit geschlossenem Karosserieaufbau das Außenblech der Karosserie auf der Innenseite durch ein Stützgerüst zu stützen. Das Stützgerüst besteht aus Profilleisten aus Stahlblech, welche gegenwärtig nach der Grundierung der Karosserie mit dem Außenblech verklebt werden. Das Verkleben geschieht so, daß ein Arbeiter eine Düse, aus welcher der Klebstoff austritt, von Hand am Spalt zwischen dem Karosserieblech und der Profilleiste entlangführt und den Klebstoff in diesen Spalt spritzt. Die Menge an Klebstoff, die dabei in den Spalt gespritzt wird, ist nicht genau kontrollierbar; es hängt von der Erfahrung und Geschicklichkeit des Arbeiters ab, ob er zu wenig Klebstoff einfüllt oder ob er zuviel Klebstoff einfüllt, so daß dieser nach außen überquillt. Der übergequollene Kleber wird beim anschließenden Lackieren der Karosserie ebenfalls lackiert, so daß er nicht sonderlich auffällt. Nach dem Lackieren wird die Karosserie in einen Lackofen überführt, um den Lack auszuhärten. Dabei wird auch der Klebstoff ausgehärtet. Leider führt das Aushärten des Klebstoffs zu Verspannungen, die auf der Außenseite der Karosserie sichtbar sein können. Um dieses zu vermeiden, besteht die Forderung, das Außenblech und das Stützgerüst der Karosserie erst nach dem Lackieren miteinander zu verkleben, damit der Klebstoff nicht der Wärmebelastung im Lackofen ausgesetzt werden muß.

Der Erfindung liegt deshalb die **Aufgabe** zugrunde, ein Verfahren zum Verkleben eines Karosseriebleches mit einer Profilleiste verfügbar zu machen, welches sich dafür eignet, die Profilleisten eines Stützgerüstes mit dem Außenblech einer Karosserie zu verkleben, nachdem diese bereits fertig lackiert worden sind. Deshalb besteht beim Verkleben zugleich die Forderung, daß der Klebstoff nicht über den Rand der Profilleiste hervorquellen soll, da hervorgequollener Klebstoff nicht oder nur unter sehr großem Aufwand wieder beseitigt werden kann und das saubere Aussehen der Karosserie stört. Außerdem besteht die Forderung, daß der Klebstoff im Zwischenraum zwischen der Profilleiste und dem Karosserieblech einen durchgehenden Strang bilden soll, um durch beidseitig klebende und durchgehende Verbindung zwischen Profilleiste und Karosserieblech das Karosserieblech besonders wirksam zu versteifen.

Diese Aufgabe wird gelöst durch ein Verfahren mit den im Anspruch 1 angegebenen Merkmalen. Vorteilhafte Weiterbildungen der Erfindung sind Gegenstand der Unteransprüche.

Das erfindungsgemäße Verfahren verwendet eine Profilleiste mit einer längs verlaufenden Folge von Löchern, durch welche der Klebstoff in Teilmengen hinter die Profilleiste gespritzt wird, um hinter jedem Loch einen Teilstrang zu bilden, wobei die Teilmengen, die durch die Folge der Löcher gespritzt werden, so gewählt werden, daß sich die im Zwischenraum zwischen der jeweiligen Profilleiste und dem Karosserieblech bildenden Teilstränge längs der Profilleiste miteinander verbinden.

Dieses Verfahren hat Vorteile:
◆ Dadurch, daß der Klebstoff nicht vom Rand der Profilleiste her hinter die Profilleiste gespritzt wird, sondern durch Löcher in der Profilleiste hindurch, ist die Gefahr, daß Klebstoff über den Rand der Profilleiste hervorquillt, viel geringer, weil der Klebstoff den Rand des Profilbleches wenn überhaupt, dann erst am Schluß seines Ausbreitungsvorganges hinter der Profilleiste erreicht.
◆ Das jeweilige Loch kann durch Einstecken einer passenden Düse während des Spritzvorganges vollständig abgedichtet werden, so daß dort ein Austreten von Klebstoff ausgeschlossen werden kann.
◆ Eine Verschmutzung des Randes der Profilleiste durch die daran entlangfahrende Düse und das Ziehen von Klebstofffäden längs des Randes einer Profilleiste, welche beim Stand der Technik vorgekommen sind, können beim erfindungsgemäßen Verfahren ausgeschlossen werden.
◆ Trotz einer diskontinuierlichen Arbeitsweise kommt es zur Ausbildung eines durchgehenden Stranges von Klebstoff im Zwischenraum zwischen Profilleiste und Karosserieblech in gleichbleibender Qualität, weil die durch das jeweilige Loch eingespritzte Teilmenge so gewählt wird, daß sich die durch die Einspritzvorgänge gebildeten Teilstränge längs der Profilleiste miteinander verbinden. Dafür lassen sich die Abstände der Löcher auf den Fließwiderstand im Zwischenraum zwischen der Profilleiste und dem Karosserieblech und auf die Fließfähigkeit des Klebstoffs so abstimmen, daß der Klebstoff den halben Weg bis zum nächsten Loch ohne Schwierigkeiten fließen kann.

Um von Loch zu Loch gleichmäßige Bedingungen für das Einspritzen und Dosieren des Klebstoffs zu haben, werden die Löcher vorzugsweise gleich groß ausgebildet und in gleichen Abständen voneinander angeordnet.

Vorzugsweise werden Profilleisten verwendet, in welchen die Löcher dort angeordnet sind, wo die dem Karosserieblech zugewandte Seite der Profilleiste den größten Abstand vom Karosserieblech hat. Das hat zur Folge, daß unmittelbar hinter den Löchern der geringste Strömungswiderstand herrscht, so daß sich der Klebstoff vorzugsweise in Längsrichtung der Profilleiste ausbreitet. Aus Symmetriegründen wird dabei bevorzugt, Profilleisten zu verwenden, welche bei ihrer Längsmittellinie den größten Abstand vorn Karosserieblech haben. Der geringste Abstand zwischen Profilleiste und Karosserieblech besteht vorzugsweise an den beiden Längsrändern der Profilleiste. Das einzuhalten war beim Stand der Technik schwierig, weil der Klebstoff vom Längsrand der Profilleiste her eingespritzt werden mußte. Erfindungsgemäß wird der Klebstoff jedoch im Bereich der Längsmittellinie der Profilleiste durch deren Löcher eingespritzt dort ist der Abstand vom Karosserieblech vorzugsweise am größten. Durch den sich zu den Längsrändern der Profilleiste hin verringernden Abstand steigt bei Annäherung an die Längsränder der Profilleiste der Fließwiderstand für den Klebstoff, so daß dieser wirksam an einem Überquellen gehindert wird. Dazu trägt auch bei, daß bei heiß eingespritztem Klebstoff eine Abkühlung des Klebstoffs um so stärker ist, je dünner die Klebstoffschicht zwischen dem Karosserieblech und der Profilleiste ist. Folglich kühlt der Klebstoff beim Fließen in Richtung auf die Längsränder der Profilleiste stark ab und verliert beträchtlich an Fließfähigkeit. Somit kann ein Überquellen des Klebstoffs über die Längsränder der Profilleisten verhindert werden, ohne daß es nötig wäre, die Profilleiste mit ihren Längsrändern in unmittelbaren direkten Kontakt mit dem Karosserieblech zu bringen. Vielmehr kann die Profilleiste in erwünschter Weise vollständig, auch an den beiden Längsrändern einen gewissen Abstand vom Karosserieblech einhalten, was sowohl aus Gründen der Geräuschentwicklung (Scheppern) als auch aus Gründen des Korrosionsschutzes wünschenswert ist.

Vorzugsweise wird der Abstand zwischen der Profilleiste und dem Karosserieblech vom größten Abstand im Bereich der Längsmittellinie der Profilleiste bis zum geringsten Abstand an den Längsrändern der Profilleiste stetig fallend gewählt, um eine möglichst hohlraumfreie Verteilung des Klebstoffs im Zwischenraum zwischen Profilleiste und Karosserieblech zu begünstigen. An den beiden Längsrändern der Profilleisten ist der Abstand zwischen der Profilleiste und dem Karosserieblech vorzugsweise an zwei Längsstreifen der Profilleisten im wesentlichen konstant, was ihre Ausrichtung erleichtert. Vorteilhaft ist es außerdem, daß ein Spalt, welcher sich nicht nur unmittelbar an der Längskante, sondern in den Längsstreifen mit konstanter Spaltbreite erstreckt, wegen seines höheren Strömungswiderstandes besonders geeignet ist, ein Überquellen von Klebstoff zu verhindern.

Vorzugsweise werden Profilleisten verwendet, deren Profilform über ihre Länge gleich bleibt. Das begünstigt ein gleichmäßiges Fließen und erleichtert das mengenmäßige Dosieren des Klebstoffs. Es ist aber auch möglich, die jeweiligen Löcher an der Spitze eines Domes anzuordnen; in diesem Fall ist in der Profilleiste z.B. durch einen Umformvorgang in einem Gesenk, eine Folge von Domen ausgebildet, an deren Spitze sich ein Loch befindet. Diese Ausbildung kann beim Einspritzen die Verteilung des Klebstoffs im Zwischenraum zwischen dem Karosseriebereich und der Profilleiste begünstigen.

Steckt man eine Düse, aus welcher der Klebstoff austritt, dicht in das jeweilige Loch der Profilleiste hinein, dann bleibt der Rand des Loches frei vom Klebstoff. Um den Klebstoff vollständig zu verbergen, kann man die Löcher nach dem Einspritzen des Klebstoffs mit einer Kappe oder mit einem Stöpsel verschließen, welche in das Loch einrasten können, welche aber auch durch den aushärtenden Klebstoff fixiert werden können. Die Kappen bzw. Stöpsel können dieselbe Farbe tragen, mit welcher die Karosserie lackiert ist.

Für das mengenmäßige Dosieren des Klebstoffs gibt es geeignete Dosierpumpen. Insbesondere eignen sich eine Zahnradpumpe und eine Kolbenpumpe, welche zweckmäßigerweise möglichst nahe bei der Düse angeordnet werden, um Einflüsse der Kompressibilität des Klebstoffs auf die Dosiergenauigkeit klein zuhalten.

Beim Verkleben des Stützgerüstes mit dem äußeren Karosserieblech ist zu berücksichtigen, daß der Abstand der Profilleisten des Stützgerüstes vom Karosserieblech über die Länge der Profilleisten nicht unbedingt konstant ist, sondern zwischen nahezu 0 bis ca. 5 mm schwanken kann. Deshalb wird in einer vorteilhaften Weiterbildung der Erfindung der Durchsatz der Dosierpumpe abhängig vom Abstand zwischen der Profilleiste und dem Karosserieblech gesteuert. Dazu ist die Düse vorzugsweise mit einem Sensor gekoppelt, welcher den Abstand zum Karosserieblech ermittelt, wenn die Düse an ein Loch in der Profilleiste angedockt hat, die Düse sich also in ihrer Einspritzposition befindet.

Die Abstandsmessung kann mit Hilfe von Abstandssensoren erfolgen, die mit Laserlicht oder mit Ultraschall arbeiten; es kann sich auch um Tastsensoren handeln, welche pneumatisch oder mechanisch arbeiten.

Aus dem gemessenen Abstand können in einem Steuergerät unter Berücksichtigung der bekannten Profilform die für das Erzeugen von sich verbindenden Teilsträngen erforderlichen Teilmengen an Klebstoff berechnet und die Dosierpumpe zum Einspritzen der berechneten Teilmengen gesteuert werden. Die Bestimmung des vom variierenden Abstand abhängigen Volumens im Zwischenraum zwischen der Profilleiste und dem Karosserieblech kann mit einer Mikroprozessorsteuerung erfolgen, welche die nötige Berechnung durchführen kann. Eine solche Mikroprozessorsteuerung kann auch die Bewegung der Düse längs einer Profilleiste steuern, wozu die Düse an einem Handhabungsgerät angebracht wird, insbesondere an dem Arm eines Gelenkarmroboters. Für die Karosserien von ein und demselben Fahrzeugtyp ist die Lage der Löcher in den Profilleisten des Stützgerüstes bei einer automatisierten Serienfertigung am besten gleich und kann der Steuerung des Handhabungsgerätes durch ein entsprechendes Programm vorgegeben werden. Es ist aber auch möglich, die Düse mit einem optischen Sensor zu koppeln, z.B. mit einer CCD - Videokamera, welche die Lage der Löcher erfaßt und mittels eines Bildverarbeitungssystems daraus die nötigen Steuersignale für den Bewegungsantrieb des Handhabungsgerätes ableitet. Eine solche Video - Steuerung kann mit einer o.a. Programmsteuerung kombiniert werden.

Die zu verwendenden Kleber sollen schnell aushärten und beim Auftragen möglichst keine Fäden ziehen; sie sollen standfest und tixotrop sein. Geeignet sind besonders Klebstoffe auf Polyuretan- oder Epoxidharzbasis und Gemische davon. Auch zweikomponentige Kleber, z.B. Polysulfide und Silikone, sind geeignet. Vorzugsweise wird ein einkomponentiger Kleber verwendet, der warm, aber auch kalt, verarbeitet werden kann.

Der weiteren Erläuterung der Erfindung dienen die beigefügten Zeichnungen.
- Figur 1: zeigt in einer Schrägansicht einen Ausschnitt aus einem Karosserieblech mit einer vor dessen Innenseite angeordneten Profilleiste und mit einer daran angedockten Düse an der Spitze eines Roboterarmes,
- Figur 2: zeigt dieselbe Ansicht, jedoch in kleinerem Maßstab mit insgesamt dargestelltem Roboter,
- Figur 3: zeigt den Ausschnitt aus dem Karosserieblech mit der davor angeordneten Profilleiste vor dem Einspritzen von Klebstoff,
- Figur 4: zeigt denselben Ausschnitt aus dem Karosserieblech mit davor angeordneter Profilleiste nach dem Einspritzen des Klebstoffs, und
- Figur 5: zeigt in einer Schrägansicht eine andersartige Gestaltung einer Profilleiste.

Gleiche oder einander entsprechende Teile sind in den Ausführungsbeispielen mit übereinstimmenden Bezugszahlen bezeichnet.

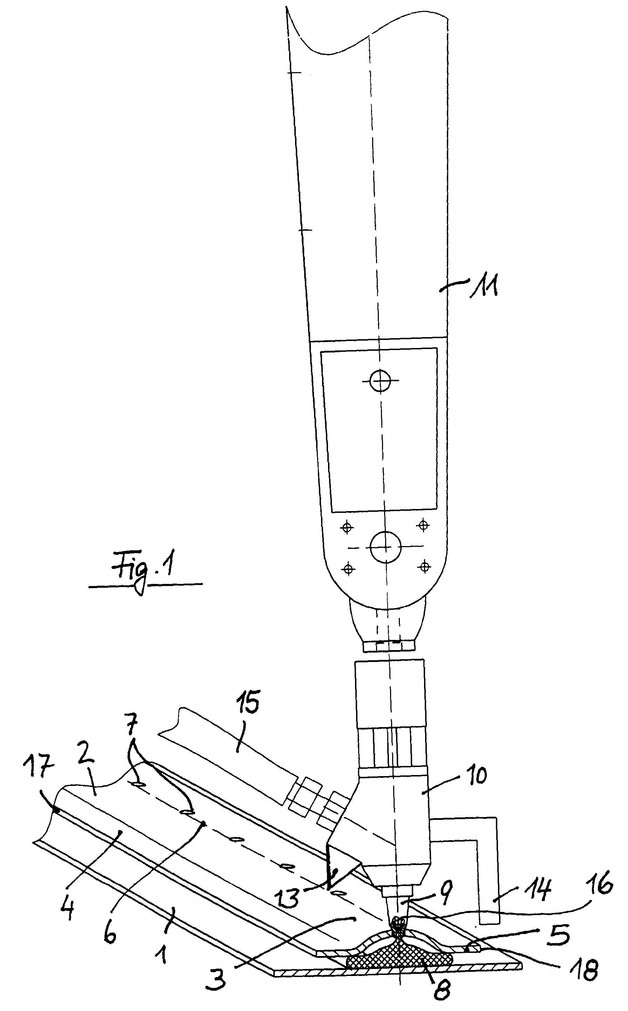

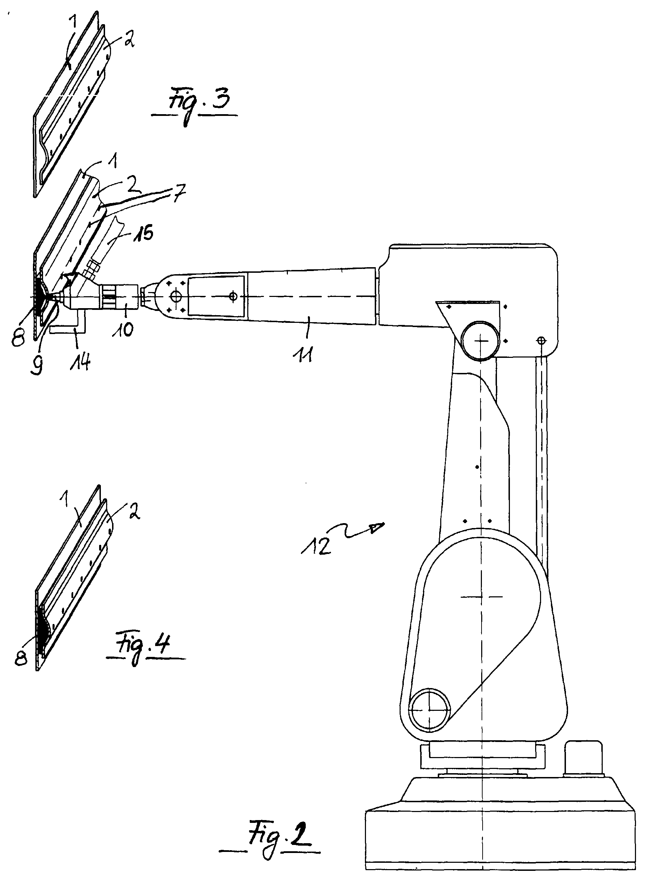

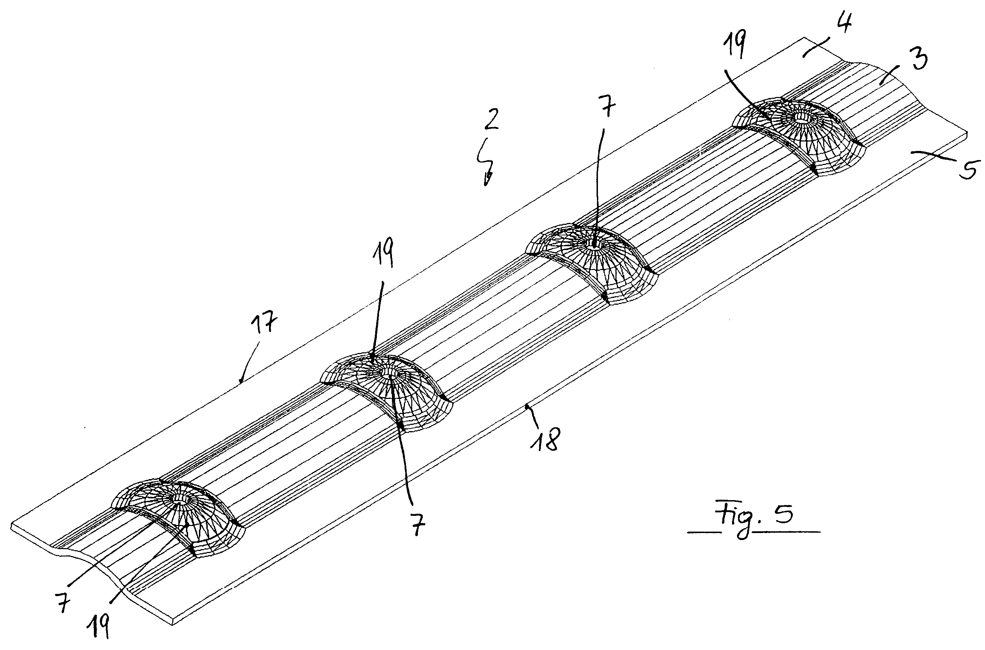

Die Figuren 1 bis 4 zeigen einen Ausschnitt aus einem Karosserieblech 1, vor dessen Innenseite eine aus Stahlblech gebildete Profilleiste 2 angeordnet ist, welche das Karosserieblech 1 nicht unmittelbar berührt. Die Profilleiste 2 hat ein über ihre Länge gleichbleibendes Profil mit einem gewölbten Mittelabschnitt 3, dessen Wölbung von dem Karosserieblech 1 weggerichtet ist. An den gewölbten Abschnitt 3 schließen beidseitig ebene Randstreifen 4 und 5 an, welche annähernd parallel zum Karosserieblech 1 verlaufen. Auf der Längsmittellinie 6 der Profilleiste 2, auf dem Scheitel des gewölbten Mittelabschnittes 3, ist eine Folge von untereinander gleichen, kreisrunden Löchern 7 vorgesehen, welche untereinander gleiche Abstände haben. Durch diese Löcher 7 kann ein Klebstoff 8 in den Zwischenraum zwischen dem Karosserieblech 1 und der Profilleiste 2 gespritzt werden. Dazu ist eine Düse 9 vorgesehen, welche in die Löcher 7 eingreifend und diese dicht verschließend an die Profilleiste 2 angedockt werden kann. Die Düse 9 befindet sich an einem Düsenkopf 10, welcher seinerseits an der Spitze eines Gelenkarms 11 eines Gelenkarmroboters 12 angebracht ist. Er wird von diesem getragen, bewegt und von Loch 7 zu Loch 7 gebracht wird.

Um die Löcher 7 zu erkennen, ist am Düsenkopf als optischer Sensor eine CCD - Kamera 13 angebracht, deren Bilder durch ein Bildverarbeitungssystem ausgewertet werden; aus den ausgewerteten Bildern abgeleitete Signale steuern die Bewegungsantriebe des Roboters 12 so, daß er die Düse 9 von Loch 7 zu Loch 7 überführt.

Am Düsenkopf 10 ist weiterhin ein Abstandssensor 14 angebracht, welcher bei angedockter Düse 9, wie in Figur 1 dargestellt, den Abstand der Düse 9 vom Karosserieblech 1 mißt, woraus mittels einer Mikroprozessorsteuerung das im Bereich des jeweiligen Loches 7 hinter der Profilleiste 2 mit Klebstoff zu füllende Volumen unter Berücksichtigung der bekannten Profilform der Profilleiste 2 berechnet und eine Dosierpumpe 15 so gesteuert wird, daß sie das erforderliche Klebstoffvolumen zur Düse 9 fördert und durch das Loch 7 hindurch in den Zwischenraum zwischen dem Karosserieblech 1 und der Profilleiste 2 spritzt. Die Dosierpumpe 15 kann z.B. eine Kolbenpumpe sein, deren Zylinder in Figur 1 und 2 schematisch dargestellt ist.

Um ein Nachfließen von Klebstoff aus der Düse 9 und ein Ziehen von Klebstoff - Fäden durch die Düse 9 zu verhindern, ist die Düse 9 durch ein Nadelventil verschließbar, dessen Nadel 16 mittels eines im Düsenkopf 10 untergebrachten, doppelt wirkenden Druckmittelzylinders zu betätigen ist. Um eine geradlinige Betätigung des Nadelventils zu ermöglichen, ist die Dosierpumpe 15 in einem Winkel zur Längsrichtung der Düse angeordnet.

Während des Einspritzens des Klebstoffs 8 verteilt dieser sich im Zwischenraum zwischen dem Karosserieblech 1 und der Profilleiste 2, wobei er bevorzugt zu beiden Seiten des Loches 7 in Längsrichtung der Profilleiste 2 fließt, weil er in dieser Richtung den größten Strömungsquerschnitt und den geringsten Widerstand vorfindet. Beim Fließen quer zur Längsrichtung der Profilleiste 2 gelangt der Klebstoff 8 in einen sich fortschreitend verengenden Spalt und schließlich in den zwischen den Randstreifen 4 und 5 auf der einen Seite und dem Karosserieblech 1 auf der anderen Seite gebildeten gleichmäßig engen Spalt mit dem geringsten Abstand zwischen Profilleiste 2 und Karosserieblech 1. Wegen des dort herrschenden größten Strömungswiderstandes kommt der Klebstoff 8 dort zur Ruhe, bevor er über die Längsränder 17 und 18 der Profilleiste 2 hinausquillt, so daß sich kein störender Anblick von Klebstoff am Rand der Profilleiste 2 ergibt.

Die durch die einzelnen Löcher 7 einzuspritzenden Klebstoffmengen werden unter Berücksichtigung des gemessenen Abstandes von dem Karosserieblech 1, unter Berücksichtigung der bekannten Profilform und unter Berücksichtigung des bekannten Abstandes der Löcher 7 voneinander so berechnet und eingespritzt, daß die Teilstränge, die beim Einspritzen durch jeweils ein Loch gebildet werden und sich in Längsrichtung der Profilleiste 2 ausbilden, ungefähr in der Mitte zwischen je zwei Löchern 7 zusammentreffen, so daß sich insgesamt ein durchgehender Klebstoffstrang ergibt, welcher eine Krafteinleitung vom Karosserieblech 1 in die Profilleiste 2 und umgekehrt erlaubt, welche längs der Profilleiste 2 nicht unterbrochen ist (siehe Figur 4). Der Klebstoff 8 schafft dabei eine weitgehend hohlraumfreie Klebeverbindung zwischen dem Karosserieblech 1 und der Profilleiste 2.

Während die in den Figuren 1 bis 4 dargestellte Profilleiste 2 eine über ihre Länge gleichbleibende Profilform hat, ist das bei der in Figur 5 dargestellten Profilleiste 2 anders. In diesem Fall ist der gewölbte Mittelabschnitt 3 der Profilleiste 2 in der Umgebung eines jeden Loches 7 überhöht ausgebildet, so daß sich eine Art Dom 19 bildet, welcher sich quer zur Längsrichtung der Profilleiste 2 über den gesamten gewölbten Mittelabschnitt 3 erstreckt und an seiner Spitze jeweils ein Loch 7 trägt. Bei dieser Ausbildung wird ein Fließen des Klebstoffs 8 in Längsrichtung der Profilleiste 2 über die gesamte Breite des gewölbten Mittelabschnittes 3 begünstigt.

Falls das aus ästhetischen Gründen gewünscht sein sollte, können die Löcher 7 durch einen Stöpsel oder eine Kappe verschlossen werden, welche nicht dargestellt sind. Aus technischen Gründen ist ein Verschließen der Löcher 7 nicht erforderlich.

### Bezugszahlenliste:

- 1.: Karosserieblech
- 2.: Profilleiste
- 3.: Mittelabschnitt
- 4.: Randstreifen
- 5.: Randstreifen
- 6.: Längsmittellinie
- 7.: Löcher
- 8.: Profilleiste
- 9.: Düse
- 10.: Düsenkopf
- 11.: Gelenkarm
- 12.: Roboter
- 13.: CCD - Kamera
- 14.: Abstandssensor
- 15.: Dosierpumpe
- 16.: Nadel
- 17.: Längsränder
- 18.: Längsränder
- 19.: Dom

## Patentansprüche

1. Verfahren zum Verkleben eines Karosseriebleches (1) mit einer Profilleiste (2) durch Einspritzen eines Klebstoffs (8) in einen zwischen dem Karosserieblech (1) und der Profilleiste (2) bestehenden Zwischenraum, so daß das Karosserieblech (1) und die Profilleiste (2) über die Länge der Profilleiste (2) miteinander verbunden werden, **dadurch gekennzeichnet**, daß eine Profilleiste (2) mit einer längs verlaufenden Folge von Löchern (7) verwendet wird und der Klebstoff (8) in Teilmengen durch diese Löcher (7) hinter die Profilleiste (2) gespritzt wird, um dort einen Teilstrang zu bilden, wobei die Teilmengen so gewählt werden, daß sich die Teilstränge längs der Profilleiste (2) miteinander verbinden.

2. Verfahren nach Anspruch 1, **dadurch gekennzeichnet**, daß eine Profilleiste (2) verwendet wird, in welcher die Löcher (7) gleich groß und in gleichen Abständen voneinander angeordnet sind.

3. Verfahren nach Anspruch 1 oder 2, **dadurch gekennzeichnet**, daß eine Profilleiste (2) verwendet wird, in welcher die Löcher (7) dort angeordnet sind, wo die dem Karosserieblech (1) zugewandte Seite der Profilleiste (2) den größten Abstand von Karosserieblech (1) hat.

4. Verfahren nach einem der vorstehenden Ansprüche, **dadurch gekennzeichnet**, daß eine Profilleiste (2) verwendet wird, welche bei ihrer Längsmittellinie (6) den größten Abstand von Karosserieblech (1) hat.

5. Verfahren nach einem der vorstehenden Ansprüche, **dadurch gekennzeichnet**, daß eine Profilleiste (1) verwendet wird, welche an ihren beiden Längsrändern (17, 18) den geringsten Abstand vom Karosserieblech (1) hat.

6. Verfahren nach Anspruch 5, **dadurch gekennzeichnet**, daß der geringste Abstand größer als Null gewählt wird.

7. Verfahren nach Anspruch 5 oder 6, **dadurch gekennzeichnet**, daß der Abstand zwischen der Profilleiste (2) und dem Karosserieblech (1) vom größten Abstand bis zum geringsten Abstand stetig fallend gewählt wird.

8. Verfahren nach Anspruch 6 oder 7, **dadurch gekennzeichnet**, daß eine Profilleiste (2) verwendet wird, bei welcher der Abstand zwischen der Profilleiste (2) und dem Karosserieblech (1) in zwei Randstreifen (4, 5) an den beiden Längsrändern (17, 18) der Profilleiste (2) gleich ist.

9. Verfahren nach einem der vorstehenden Ansprüche, **dadurch gekennzeichnet**, daß eine Profilleiste (2) verwendet wird, deren Profilform über ihre Länge gleich bleibt.

10. Verfahren nach einem der Ansprüche 1 bis 8, **dadurch gekennzeichnet**, daß eine Profilleiste (2) verwendet wird, in welcher eine Folge von Domen (19) ausgebildet ist, und daß an der Spitze der Dome (19) jeweils eines der Löcher (7) vorgesehen ist.

11. Verfahren nach einem der vorstehenden Ansprüche, **dadurch gekennzeichnet**, daß die Löcher (7) nach dem Einspritzen des Klebstoffs (8) mit einer Kappe oder mit einem Stöpsel verschlossen werden.

12. Verfahren nach einem der vorstehenden Ansprüche, **dadurch gekennzeichnet**, daß der Klebstoff (8) mittels einer Düse (9) eingespritzt und durch eine Dosierpumpe (15) der Düse (9) zugeführt wird.

13. Verfahren nach Anspruch 12, **dadurch gekennzeichnet**, daß als Dosierpumpe (15) eine Zahnradpumpe verwendet wird.

14. Verfahren nach Anspruch 12, **dadurch gekennzeichnet**, daß als Dosierpumpe (15) eine Kolbenpumpe verwendet wird.

15. Verfahren nach einem der Ansprüche 12 bis 14, **dadurch gekennzeichnet**, daß der Durchsatz der Dosierpumpe (15) abhängig vom Abstand zwischen der Profilleiste (2) und dem Karosserieblech (1) gesteuert wird.

16. Verfahren nach einem der Ansprüche 12 bis 15, **dadurch gekennzeichnet**, daß die Düse (9) durch ein Handhabungsgerät, insbesondere durch einen Gelenkarmroboter (12), bewegt wird.

17. Verfahren nach einem der Ansprüche 12 bis 16, **dadurch gekennzeichnet**, daß die Düse (9) mit einem Sensor (14) gekoppelt ist, welcher den Abstand zum Karosserieblech (1) ermittelt, wenn die Düse (9) an ein Loch (7) in der Profilleiste (2) angedockt hat, und daß aus dem gemessenen Abstand unter Berücksichtigung der bekannten Profilform die für das Erzeugen von sich verbindenden Teilsträngen erforderliche Teilmenge Klebstoff (8) berechnet und die Dosierpumpe (15) zum Einspritzen der berechneten Teilmenge gesteuert wird.

18. Verfahren nach einem der Ansprüche 12 bis 17, **dadurch gekennzeichnet**, daß die Düse (9) mit einem optischen Sensor (13) gekoppelt ist, welcher die Lage der Löcher (7) ermittelt und einen oder mehrere Bewegungsantriebe der Handhabungseinrichtung (12) so steuert, daß sie zum jeweils nächsten Loch (7) geführt wird.

19. Verfahren nach Anspruch 18, **dadurch gekennzeichnet**, daß der optische Sensor (13) eine elektronische, vorzugsweise eine digitale Videokamera ist, welche mit einem die Bewegungsantriebe der Handhabungseinrichtung (12) steuernden Bildverarbeitungssystem verbunden ist.
